# EUROPÄISCHE PATENTANMELDUNG

(11) **EP 1 106 453 A2**
(43) Veröffentlichungstag der Anmeldung: **13.06.2001**
(21) Anmeldenummer: 00125379.8
(22) Anmeldetag: 01.12.2000
(51) Int. Cl.: B60S 1/04

(54) **Wischerblattentlastung eines Scheibenwischers für Kraftfahrzeuge**

(30) Priorität: 08.12.1999 DE 19959139
(71) Anmelder: Volkswagen Aktiengesellschaft, 38436 Wolfsburg (DE)
(72) Erfinder: Ackermann, Frank, 38154 Königslutter/Lauingen (DE)

(57) **Zusammenfassung**

Wischerblattentlastung, bei dem eine Gleitschiene des Scheibenwischers auf eine an der Karosserie fixierte Rampe mit zur Parkendstellung ansteigender Gleitebene aufläuft, wobei die Gleitebene (2) der Rampe (1) durch einen Anschlag (3) am höchsten Punkt abgeschlossen ist und die Gleitschiene (5) des Scheibenwischers beim Heraufgleiten am Anschlag (3) eine definierte Parkstellung erreicht.

## Beschreibung

Die Erfindung betrifft eine Wischerblattentlastung eines Scheibenwischers für Kraftfahrzeuge in der Parkstellung, wobei der Scheibenwischer aus einem Wischerarm und einem daran befestigten Wischerblatt besteht. Das Wischerblatt besitzt ein Bügelsystem und einen Wischergummi. Durch das Bügelsystem und den Wischerarm wird der Wischergummi nachgiebig gegen die Glasscheibe gedrückt. Der Scheibenwischer ist in eine Parkstellung verfahrbar.

Um die Reinigungswirkung des Scheibenwischers zu gewährleisten, wird meist über ein Federsystem ein Anpreßdruck auf das Wischerblatt ausgeübt, welcher den Wischergummi mit seiner Lippe an die Glasscheibe andrückt. Dieser für die Flüssigkeitsentfernung notwendige Anpreßdruck wirkt nicht nur im Betrieb, sondern kontinuierlich also auch in der Parkstellung sowie auch, wenn das Kraftfahrzeug nicht benutzt wird. Die kontinuierliche Druckbelastung des Wischergummis ist insbesondere bei Witterungsunbilden nachteilig. Im Winter bei Kälte friert der Wischergummi mit seiner Dichtlippe an der Glasscheibe fest, im Sommer bei hohen Temperaturen klebt der Wischergummi an der Glasscheibe. Besonders im Winter bedarf es Aufwand, um den Scheibenwischer wieder funktionsfähig zu machen; beispielsweise mittels Benetzen der Glasscheibe mit Auftaumitteln. Wird dieser Aufwand nicht betrieben, so besteht die Gefahr, daß die Wischergummilippe abreißt bzw. beschädigt wird und damit die Lebensdauer des Wischergummis stark herabgesetzt ist.

In der EP 0812744 A1 wird eine Einrichtung zum Beabstanden eines Scheibenwischers von einer Scheibe beschrieben. Am Schwenkarm ist eine Fixiervorrichtung befestigt, an der ein Distanzhalter mit einer Scheibenkontaktfläche bewegbar angeordnet ist.

Zum Abheben des Wischerarmes wird der Distanzhalter gegenüber der Fixiervorrichtung um eine quer zum Schwenkarm gerichtete Drehachse so gedreht, daß die Scheibenkontaktfläche auf der Scheibe aufsitzt und der Abstand der Scheibenkontaktfläche von der Fixiervorrichtung maximal ist. Der Distanzhalter stützt sich in diesem Fall an der Scheibe ab und beabstandet dadurch den Scheibenwischer von der Scheibe. Zum Entriegeln muß der Distanzhalter wieder so gedreht werden, daß der Abstand der Scheibenkontaktfläche von der Fixiervorrichtung minimal ist. Diese Einrichtung zum Beabstanden des Scheibenwischers ist nur beim Abstellen des Fahrzeuges einsetzbar. Der Distanzhalter ist von Hand zu betätigen, was die Gefahr in sich birgt, daß bei Inbetriebnahme des Fahrzeuges keine Entriegelung der Scheibenwischer erfolgt. Es wird zwar vorgeschlagen, den Distanzhalter über Antriebselemente und Regeleinrichtungen zu steuern, dies ist jedoch technisch aufwendig.

Die DE 4202965 C1 beschreibt eine Wischvorrichtung für Glasscheiben von Fahrzeugen, wobei über ein Verstellelement einer Hubvorrichtung der Wischerarm in Parkstellung angehoben wird. Eine Hubvorrichtung mit einem Hubarm kann in einer Parkstellung des Wischers mit einer Angriffsfläche von unten anhebend auf den Wischerarm einwirken. Der Hubarm ist über eine Lagerstelle nach dem Hebelprinzip einsetzbar. Ein Verstellelement mittels pneumatischer Unterdruck-Ansteuerung über Kolben und Feder verschiebt den Hubarm dergestalt, daß der Wischerarm in Parkstellung angehoben bzw. bei Wischeinsatz wieder in Richtung Scheibenebene abgesetzt wird. Diese Vorrichtung ist kompliziert aufgebaut und störanfällig.

Die DE 3346845 A1 schlägt ein verschwenkbares Stützglied zum Abstandhalten eines Scheibenwischers von einer Sichtscheibe vor, wobei in Betriebslage das Stützglied an der Sichtscheibe anliegt und Tragarm und Wischerblattrahmen anhebt. Beim Anlaufen des Scheibenwischers geht das Stützglied mittels Federn aus der Betriebslage in eine Ruhelage über.

Die angehobenen Scheibenwischer der dargelegten Ausführungen neigen durch die Entlastung der Wischerarme beim Fahren zu einem sogenannten Flattern des Wischerblattes. Bei dieser Entlastung der gesamten Wischerarme muß stets der Druck der Anpreßfedern der Wischerarme überwunden werden.

Um zu einem schonenden Gebrauch der Scheibenwischer zu gelangen, wurden bereits Ausführungen bekannt, die nur den Wischergummi in Parkstellung abheben und zwar in der Weise, daß der partielle Anpreßdruck des Wischerblattes verringert oder aufgehoben wird.

Eine diesbezügliche Lösung ist in DE 29615696 U1 beschrieben, mit dem Vorteil, daß nur das Wischerblatt angehoben wird und nicht der gesamte Trägerarm. Ein Befestigungsglied ist an dem Wischerblatt angebracht und über eine Welle ist eine Spannklammer mit Distanzhalter drehbar gelagert. Beim Abstützen des Distanzhalters an der Windschutzscheibe wird das Wischerblatt gegen die Druckkraft des Wischerarmes in Abstand zur Windschutzscheibe gehalten. Auch bei dieser Konstruktion ist eine manuelle Betätigung notwendig.

Darüber hinaus sind an Scheibenwischern angebrachte Luftleiteinrichtungen oder Spoiler bekannt, die den Anpreßdruck des Wischergummis erhöhen oder die Aerodynamik verbessern sollen. So beschäftigt sich die DE 3225919 A1 mit einem strömungsgünstig gestalteten Heck eines Personenkraftwagens. Hierbei ist auf einem Wischerarm auf der der Sichtscheibe abgekehrten Seite eine den Luftwiderstandsbeiwert reduzierende Luftleitvorrichtung aufgesetzt. Der Spoiler besitzt eine aerodynamische Abrißkante. Diese spoilerartigen Anordnungen entlasten nicht das Wischerblatt.

Allen bekannten Lösungen zum Beabstanden des Wischergummis ist eine undefinierte Lage der Scheibenwischer in Parkstellung gemeinsam, die durch das Flattern des angehobenen Wischerblattes noch verstärkt wird.

Der Erfindung liegt die Aufgabe zugrunde, eine Wischerblattentlastung eines Scheibenwischers für Kraftfahrzeuge zu schaffen, bei der das Wischerblatt eine fixierte Lage in der Parkstellung einnimmt.

Die Aufgabe wird erfindungsgemäß durch eine Wischerblattentlastung mit den kennzeichnenden Merkmalen des Patentanspruches 1 gelöst. Aus- und Weiterentwicklungen der Erfindung sind in den Unteransprüchen niedergelegt.

Die Erfindung besteht darin, daß beim Aufgleiten der Gleitschiene auf die Gleitebene der Anhebevorgang des Wischerblattes durch einen Anschlag beendet wird. Die Gleitschiene des Scheibenwischers berührt die Kante des Anschlages. Damit wird die Sollage für die Parkstellung des Scheibenwischers festgelegt. Die Gleitkante der Gleitschiene sitzt in der definierten Parkstellung in einer Vertiefung der Gleitebene. Das ist eine Art Raststelle und fixiert den Scheibenwischer und verhindert das Lösen desselben aus der Parkstellung bei Fahrerschütterungen.

Nach einer Ausgestaltung der Erfindung bestehen zumindest Teile der Rampe und/oder des Anschlages aus einem elastischen Material, insbesondere Hartgummi.

Eine andere Ausführung sieht vor, daß die Oberfläche der Rampe und/oder die Oberfläche des Anschlages zumindest teilweise eine elastische Beschichtung, insbesondere eine Gummibeschichtung, aufweisen.

Beide Ausführungen haben den Vorteil, daß ein hartes Aufschlagen des Wischerblattes vermieden wird.

Zusätzlich kann vorgesehen sein, daß die Rampe und/oder der Anschlag Mittel zum Beheizen aufweisen, die zumindest , wenn sich das Wischerblatt in seiner Parkstellung befindet und der Motor des Fahrzeuges in Betrieb ist, aktiv sind.

Die Erfindung wird im folgenden an Hand eines Ausführungsbeispieles näher erläutert.

Die zugehörige Zeichnung zeigt einen schematischen Querschnitt.

Die Rampe 1 besitzt eine ansteigende Gleitebene 2 und einen Anschlag 3 mit Anschlagkante 4, an die die spoilerartige Kante der Gleitschiene 5 anstößt. In dieser Stellung läuft die Gleitschienenkante in eine formgerechte Vertiefung 6 der Gleitebene. Die Rampe 1 ist dem Windlauf 7 zugeordnet. Windlauf 7 und Glasscheibe 8 stoßen an einen gemeinsamen Träger 9 und haben infolgedessen eine genaue Lage zueinander.

Durch den Anschlag 3 ist die Parkstellung auf der Glasscheibe 8 unabhängig von anderen Fertigungsungenauigkeiten definiert.

### BEZUGSZEICHENLISTE

- 1: Rampe
- 2: Gleitebene
- 3: Anschlag
- 4: Anschlagkante
- 5: Gleitschiene
- 6: Vertiefung
- 7: Windlauf
- 8: Glasscheibe
- 9: Träger

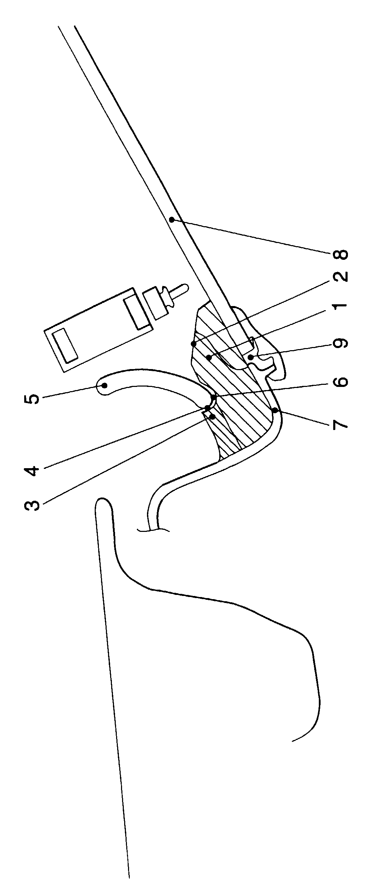

## Patentansprüche

1. Wischerblattentlastung eines Scheibenwischers für Kraftfahrzeuge, bei dem eine Gleitschiene (5) des Scheibenwischers auf eine an der Karosserie fixierte Rampe (1) mit zur Parkstellung ansteigender Gleitebene (2) aufläuft, **dadurch gekennzeichnet**, daß die Gleitebene (2) der Rampe (1) durch einen Anschlag (3) am höchsten Punkt abgeschlossen ist und die Gleitschiene (5) des Scheibenwischers beim Heraufgleiten am Anschlag (3) eine definierte Parkstellung erreicht.

2. Wischerblattentlastung nach Anspruch 1, **dadurch gekennzeichnet**, daß die Gleitebene (2) der Rampe (1) unmittelbar vor dem Anschlag (3) eine der Form der Gleitschiene (5) angepaßte Vertiefung (6) aufweist.

3. Wischerblattentlastung nach Anspruch 1 und 2, **dadurch gekennzeichnet**, daß der Anschlag (3) mit einer Anschlagkante (4) einen treppenförmigen Absatz darstellt.

4. Wischerblattentlastung nach einem der Ansprüche 1 bis 3, dadurch gekennzeichnet, daß zumindest Teile der Rampe (1) und/oder des Anschlags (3) aus einem elastischen Material, insbesondere Hartgummi, bestehen.

5. Wischerblattentlastung nach einem der Ansprüche 1 bis 3, dadurch gekennzeichnet, daß die Oberfläche der Rampe (1) und/oder die Oberfläche des Anschlages (3) zumindest teilweise eine elastische Beschichtung, insbesondere eine Gummibeschichtung, aufweist.

6. Wischerblattentlastung nach einem der Ansprüche 1 bis 5, dadurch gekennzeichnet, daß die Rampe (1) und/oder der Anschlag (3) Mittel zum Beheizen aufweisen.
